# EUROPÄISCHE PATENTSCHRIFT

(11) **EP 3 178 143 B1**
(45) Veröffentlichungstag und Bekanntmachung des Hinweises auf die Patenterteilung: **06.06.2018**
(21) Anmeldenummer: 15760118.8
(22) Anmeldetag: 26.08.2015
(51) Int. Cl.: H02G 5/02, H02G 5/06, H02G 5/00, H02G 5/10

(54) **ABSTANDSMITTEL FÜR IN EINEM GEHÄUSE EINES MODULS EINES STROMSCHIENENSYSTEMS ANGEORDNETE STROMSCHIENEN, MODUL MIT ENTSPRECHENDEN ABSTANDSMITTELN UND STROMSCHIENENSYSTEM MIT MEHREREN ENTSPRECHENDEN MODULEN**
SPACER FOR BUS BARS ARRANGED IN AN ENCLOSURE OF A MODULE OF A BUSBAR SYSTEM, MODULE WITH SUCH SPACERS AND BUSBAR SYSTEM WITH SEVERAL CORRESPONDING MODULES
ENTRETOISE POUR CONDUCTEURS AGENCÉS DANS UNE ENVELOPPE D'UN MODULE D'UN SYSTÈME DE BARRES OMNIBUS, MODULE COMPRENANT DE TELLES ENTRETOISES ET SYSTÈME DE BARRES OMNIBUS COMPRENANT PLUSIEURS MODULES CORRESPONDANTS.

(30) Priorität: 22.09.2014 DE 102014218998; 22.09.2014 DE 202014007783 U
(43) Veröffentlichungstag der Anmeldung: 14.06.2017
(73) Patentinhaber: Siemens Aktiengesellschaft, 80333 München (DE)
(72) Erfinder: ALEFELDER, Frank, 53819 Neunkirchen-Seelscheid (DE); BERTELS, Frank, 50765 Köln (DE); HAAR, Rainer, 53121 Bonn (DE); ROTH, Markus, 51371 Leverkusen (DE)
(86) Internationale Anmeldenummer: PCT/EP2015/069538
(87) Internationale Veröffentlichungsnummer: WO 2016/045899

(56) Entgegenhaltungen:
- EP-B1- 0 530 521
- WO-A1-2012/038177
- WO-A1-2013/152885
- FR-A5- 2 049 586
- US-A- 5 785 542

## Beschreibung

Die Erfindung betrifft ein Abstandsmittel für in einem Gehäuse eines Moduls eines Stromschienensystems angeordnete Stromschienen, ein Modul mit entsprechenden Abstandsmitteln und ein Stromschienensystem mit mehreren entsprechenden Modulen gemäß den Oberbegriffen der Ansprüche 1, 7 und 8.

Stromschienensysteme mit mehreren längs hintereinander liegend angeordneten Stromschienenpaketen (Module) sind bekannt. Die Stromschienenpakete bestehen jeweils aus mehreren parallel zueinander verlaufenden Stromschienen, die mittels elektrisch isolierenden Abstandselementen zwischen den Stromschienen angeordnet sind. Zum Zusammenhalten der Stromschienen dienen Spannelemente, die quer durch die Stromschienen und die Abstandselemente verlaufen, wobei die Abstandselemente die Spannelemente von den Stromschienen isolieren.

Zum Schutz der Stromschienen dient ein Gehäuse, aus dem die Stromschienenenden beispielsweise stirnseitig herausragen. Abstandmittel sorgen dafür, dass die Stromschienen mit Abstand zu den Gehäusewänden im Gehäuse gehalten sind. Dazu dienen im einfachsten Falle an den Stromschienenpaketen angeordnete Isolationselemente.

Insbesondere sind aus der US 5 785 542 A Abstandsmittel für in einem Gehäuse eines Moduls eines Stromschienensystems angeordnete Stromschienen bekannt, die jeweils parallel zueinander verlaufen und mit Hilfe von elektrisch isolierenden Abstandselementen beabstandet sind. Die Stromschienen sind mit Hilfe von Spannelementen zusammengehalten, die quer durch die Stromschienen und die Abstandselemente verlaufen. Die Stromschienenenden ragen stirnseitig aus dem Gehäuse heraus, wobei mehrere Module des Stromschienensystems jeweils längs hintereinanderliegend angeordnet und elektrisch miteinander verbunden sind.

Die WO 2012/038177 A1 offenbart ein Abstandsmittel, das einen quer zur Längserstreckung im Gehäuse angeordneten Rahmen aufweist, in dem eine Durchgangsöffnung ausgebildet ist, durch welche die Stromschienen unter Belassung eines Abstands verlaufen. Als Stützelemente dienen die Kanten der U-förmigen Streben, die an der Außenkontur des Rahmens angeordnet sind, die bei Anlage an der unmittelbar gegenüberliegenden Innenseite des Gehäuses im Gehäuse in Richtung Längserstreckung bewegbar sind und unterschiedliche Ausdehnungen ausgleichen können ("Dehnungskasten").

Die Aufgabe der Erfindung ist es, ein Abstandsmittel vorzuschlagen, bei dem die unterschiedlichen Ausdehnungskoeffizienten von Gehäuse und Stromschienen zu keinerlei Verspannungen führen.

Die Aufgabe wird bezogen auf die Abstandsmittel, das Modul und das Stromschienensystem mit den Merkmalen der Ansprüche 1, 7 und 8 gelöst.

Die Lösung sieht bezogen auf die Abstandsmittel vor, einen quer zur Längserstreckung der Stromschienen im Gehäuse anordenbaren Rahmen, in dem eine Durchgangsöffnung ausgebildet ist, durch welche die Stromschienen unter Belassung eines Abstands verlaufen, wobei die Enden des Spannelements beidseitig der Durchgangsöffnung am Rahmen befestigbar sind, und mit einem an der Außenkontur des Rahmens angeordneten Stützelement, das bei Anlage an der unmittelbar gegenüberliegenden Innenseite des Gehäuses (der Gehäusewand) im Gehäuse in Richtung Längserstreckung bewegbar ist.

Eine technisch einfache und stabile Ausführung wird erzielt, wenn der Rahmen aus vier an den Enden miteinander verbundenen Streben gebildet ist, welche in Längserstreckung der Streben gesehen eine u-förmige Querschnittskontur mit einem Boden und zwei Seitenschenkeln aufweisen, wobei sich die Seitenschenkel quer zur Längserstreckung gesehen zumindest über eine Teillänge der Streben erstrecken und wobei zwei Streben auf beiden Stirnseiten Laschen aufweisen, die jeweils mit dem Boden der beiden anderen Streben unter Bildung der Durchgangsöffnung miteinander verbunden sind.

Der Herstellung vereinfacht sich, wenn jede Strebe aus einem an seinen Längsseiten u-förmig gebogenen Blechstreifen gebildet ist.

Zur Verbesserung der Kühlung der Stromschienen mittels Zugluft wird vorgeschlagen, dass die Böden der Streben Durchgangsöffnungen aufweisen.

Eine technisch einfache und stabile Befestigung wird erzielt, wenn die Enden des Spannelements an den beiden beidseitig der Durchgangsöffnung innen einander zugewandten Seitenschenkeln befestigt (abgestützt) sind.

Die Lösung sieht bezogen auf das Modul vor, dass die Abstandsmittel einen quer zur Längserstreckung (der Stromschienen) im Gehäuse angeordneten Rahmen und eine im Rahmen ausgebildete Durchgangsöffnung aufweisen, durch welche die Stromschienen unter Belassung eines Abstands verlaufen, wobei die Enden des Spannelements beidseitig der Durchgangsöffnung am Rahmen befestigt sind, und
mit einem an der Außenkontur des Rahmens angeordneten Stützelement, das bei Anlage an der unmittelbar gegenüberliegenden Innenseite des Gehäuses (der Gehäusewand) im Gehäuse in Richtung Längserstreckung bewegbar ist.

Die Lösung sieht bezogen auf das Stromschienensystem vor, dass die Abstandsmittel einen quer zur Längserstreckung (der Stromschienen) im Gehäuse angeordneten Rahmen und eine im Rahmen ausgebildete Durchgangsöffnung aufweisen, durch welche die Stromschienen unter Belassung eines Abstands verlaufen, wobei die Enden des Spannelements beidseitig der Durchgangsöffnung am Rahmen befestigt sind, und mit einem an der Außenkontur des Rahmens angeordneten Stützelement, das bei Anlage an der unmittelbar gegenüberliegenden Innenseite des Gehäuses (der Gehäusewand) im Gehäuse in Richtung Längserstreckung bewegbar ist.

Die Erfindung wird nachfolgend anhand eines Ausführungsbeispiels näher beschrieben. Es zeigen:
- Fig. 1: ein Schienenmodul mit abgenommenem oberen Teil des zweiteiligen Gehäuses in einer dreidimensionalen Darstellung,
- Fig. 2: eine vergrößerte Darstellung des mittleren Bereichs zweier hintereinander liegender Schienenmodule gemäß Fig. 1,
- Fig. 3: das Schienenmodul gemäß Fig. 1 mit geschlossenem Gehäuse,
- Fig. 4: das Modul gemäß Fig. 1 in Richtung Längserstreckung auf die vordere Stirnseite gesehen,
- Fig. 5: das Modul gemäß Fig. 4 ohne die Stromschienen und
- Fig. 6: den Rahmen gemäß Fig. 5 in einer dreidimensionalen Darstellung.

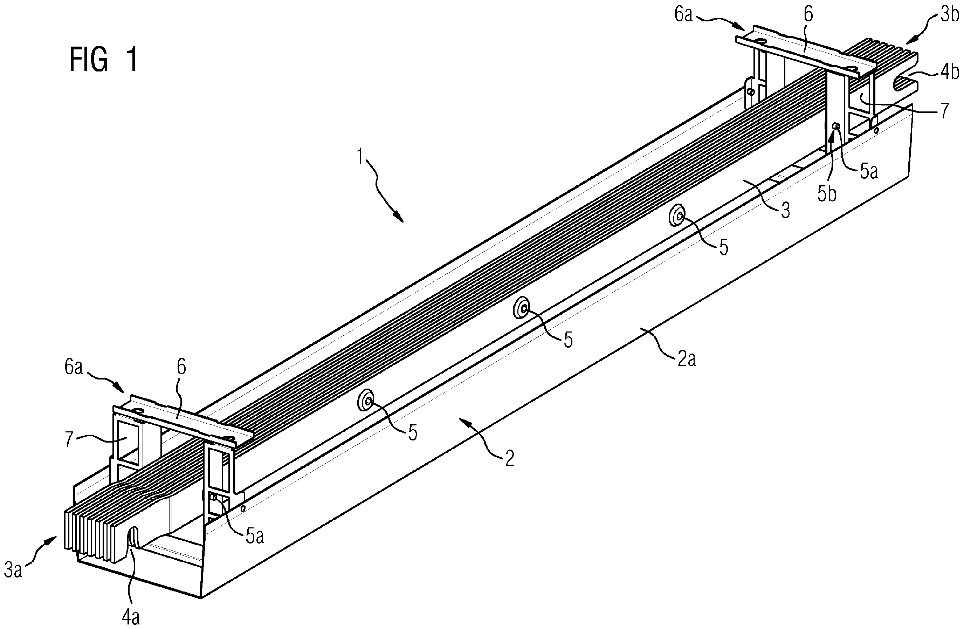

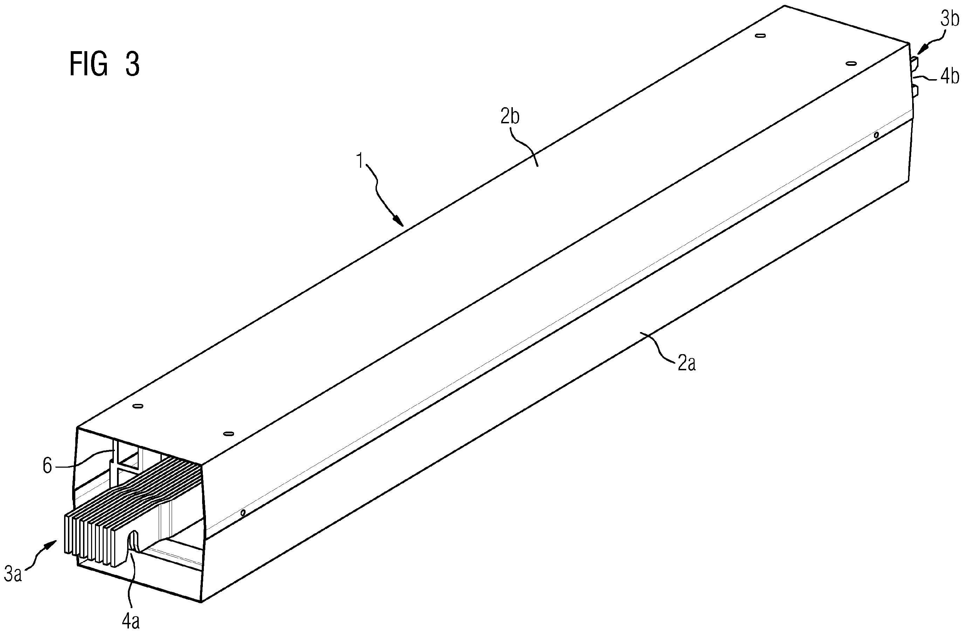

Fig. 1 zeigt ein Schienenmodul 1 mit einem zweiteiligen Gehäuse 2, von dem nur der untere Teil 2a zu sehen und der obere Teil 2b (s. Fig. 3) abgenommen ist. In dem Gehäuse 2 befinden sich mehrere mit einem Abstand parallel zueinander angeordnete Stromschienen 3 (als Stromschienenpaket), die an beiden Enden 3a, 3b einseitig offene Ausnehmungen 4a, 4b aufweisen. Dabei verlaufen die Ausnehmungen 4a an dem einen Ende 3a alle jeweils quer zur Längserstreckung der Stromschienen 3; am gegenüberliegenden Ende 3b erstrecken sich die Ausnehmungen 4b alle jeweils in Längsrichtung. Die Stromschienen 3 werden durch Schrauben 5, 5a als Spannelemente 5b zusammengehalten, wobei die Schrauben 5a im Bereich der Enden 3a, 3b zusätzlich an Rahmen 6 als Abstandsmittel 6a innerhalb des Gehäuses 2 befestigt (abgestützt) sind. Die Rahmen 6 sorgen dafür, dass die Stromschienen 3 im Gehäuse 2 beabstandet angeordnet und bei Bedarf abgestützt sind. Um bei geschlossenem Gehäuse 2 ein (insbesondere bei vertikaler Ausrichtung kaminartiges) Durchströmen von Kühlluft zu ermöglichen, sind in den Rahmen 6 Durchtrittsöffnungen 7 vorhanden. Die Größe des Rahmens 6 und der Durchtrittsöffnungen 7 sind an die Gehäusegröße und den gewünschten insbesondere kaminartigen Kühlluftdurchsatz angepasst.

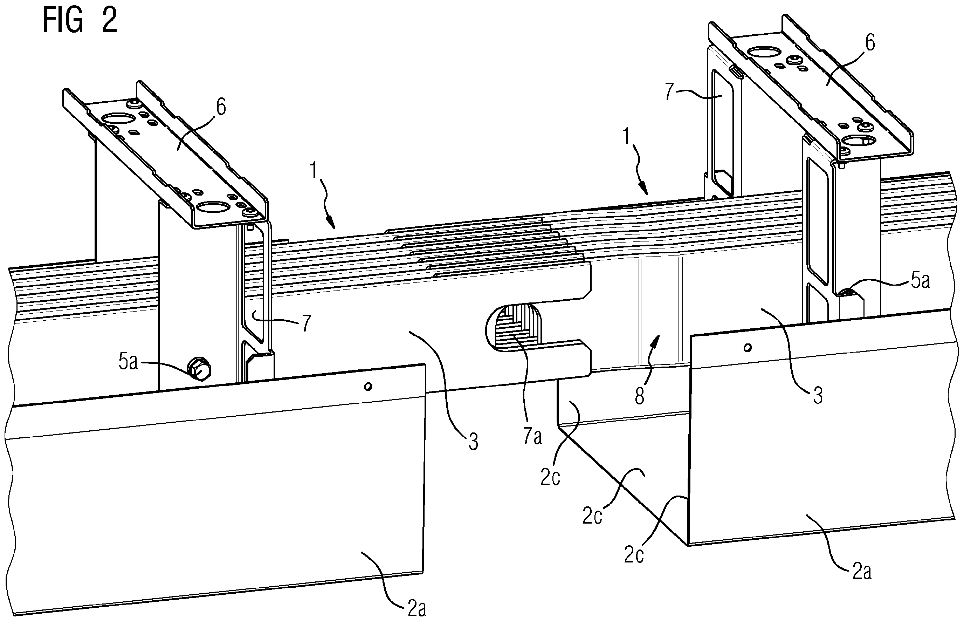

Fig. 2 zeigt den mittleren Bereich von zwei hintereinander liegenden Schienenmodulen 1 eines Stromschienensystems in einer vergrößerten Darstellung. Dabei bilden die in Längserstreckung verlaufenden Ausnehmungen 4b des linken Schienenmoduls und die quer zur Längserstreckung verlaufenden Ausnehmungen 4a des Schienenmoduls von der Seite gesehen eine geschlossene Durchgangsöffnung 7a.

Man erkennt, dass jeweils eine Stromschiene 3 des linken Schienenmoduls 1 seitlich an einer Stromschiene 3 des rechten Schienenmoduls 1 anliegt. Auf diese Weise ist jeweils eine Stromschiene 3 des einen Schienenmoduls 1 mit einer Stromschiene 3 des anderen Schienenmoduls 1 elektrisch verbunden. Um einen Versatz innerhalb des Gehäuses 2 zu vermeiden, sind alle Stromschienen an einem Ende (dem Ende 3a) entsprechend gekröpft, d. h. sie weisen jeweils eine Kröpfung 8 auf. Das andere Ende 3b ist ungekröpft.

In Fig. 3 ist der Vollständigkeit halber das Schienenmodul 1 mit geschlossenem Gehäuse 2 (dem Unterteil 2a und dem Oberteil 2b) gezeigt.

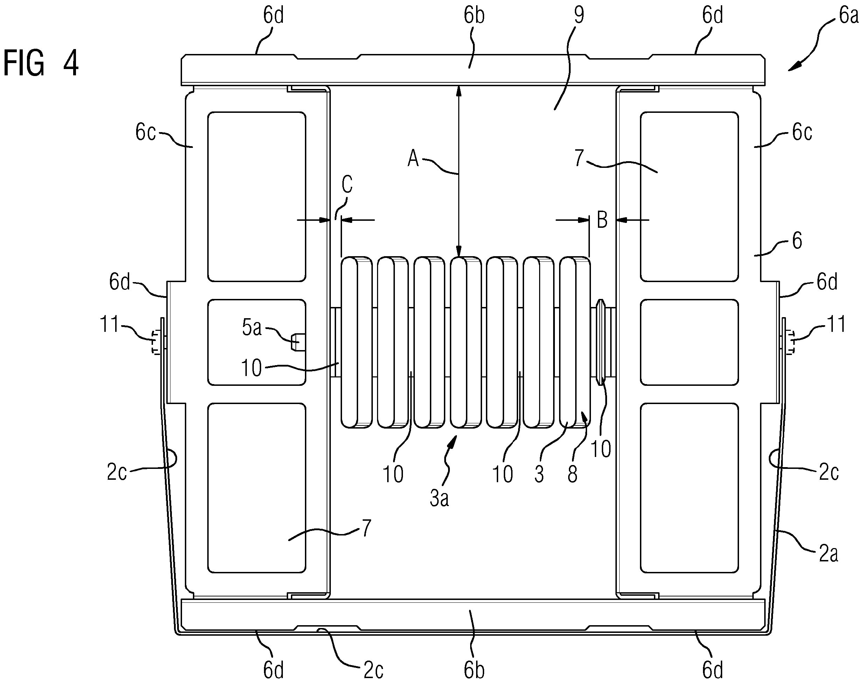

Fig. 4 zeigt den Rahmen 6, der aus vier Streben 6b, 6c, die eine Durchgangsöffnung 9 bilden besteht. Durch die Durchgangsöffnung 9 hindurch verlaufen die Stromschienen 3 unter Belassung eines Abstands A, B, C. Abstandselemente 10 zwischen den Stromschienen 3 und dem Rahmen 6 sorgen dafür, dass die Stromschienen 3 voneinander isoliert sind. Die Enden der Schrauben 5a (Spannelement 5b) sind beidseitig der Durchgangsöffnung 9 am Rahmen 6 befestigt.

Die zeitweise Befestigung des Gehäuses 2a beispielsweise zu Transportzwecken kann an zwei außenliegenden voneinander abgewandten Seiten des Rahmens 6 mittels Schrauben 11 erfolgen. Im Betrieb fehlen die Schrauben 11, da es sonst zu Spannungen zwischen dem Gehäuse 2 und dem Rahmen 6 (den Stromschienen 3) kommen kann. Die Außenkontur des Rahmens 6 bilden in Fig. 4 die Kanten 6d.

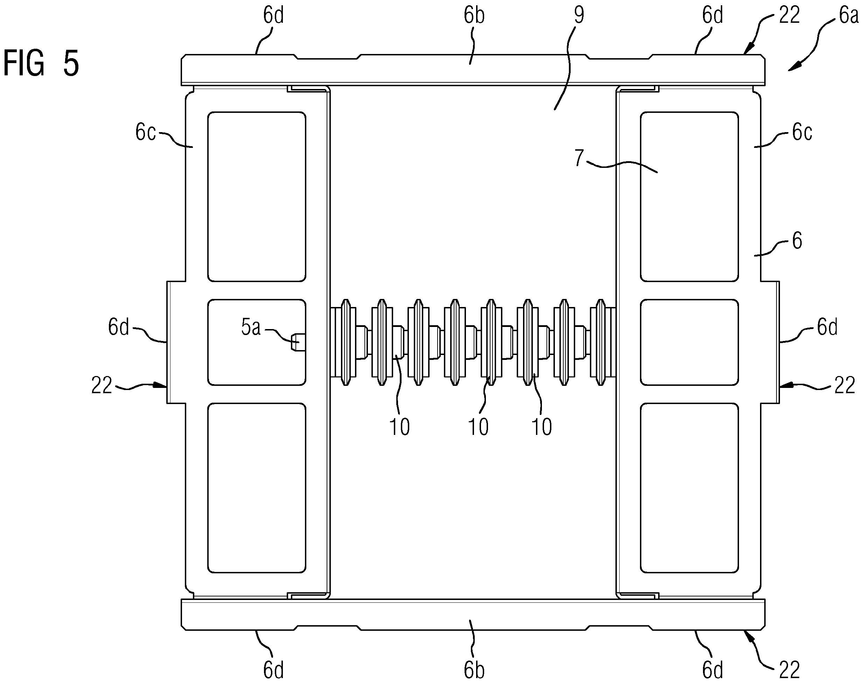

Fig. 5 zeigt den Rahmen 6 gemäß Fig. 4 ohne die Stromschienen 3. Man erkennt die nebeneinander angeordneten Abstandselemente 10, die teilweise ineinandergesteckt sind.

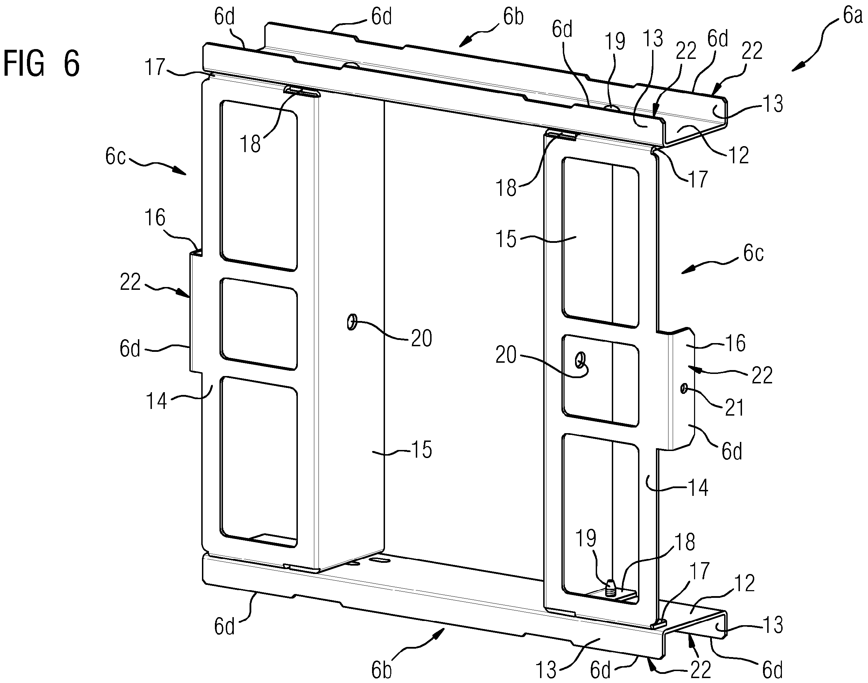

Fig. 6 zeigt den Rahmen 6 gemäß Fig. 5 in einer dreidimensionalen Darstellung. Die beiden oberen Streben 6b sind gleich ausgebildet, genauso wie die beiden gegenüberliegenden seitlichen Streben 6c. Man erkennt, dass die beiden Streben 6b ein u-Profil mit einem Boden 12 und zwei Seitenschenkel 13 aufweisen, wobei die Böden 12 einander zugewandt und die Seitenschenkel 13 voneinander abgewandt sind. Die quer zu den Streben 6b verlaufenden Streben 6c verfügen ebenfalls über einen Boden 14 und Seitenschenkel 15, 16. Die beiden Streben 6c sind jeweils gleich ausgebildet und weisen eine u-förmige Querschnittskontur auf, jeweils mit einem Boden 14 und den Seitenschenkeln 15, 16, wobei sich der Seitenschenkel 16 nur über eine Teillänge der Strebe 6a erstreckt. An beiden Enden weisen die Streben 6c Laschen 17, 18 auf, die jeweils am Boden 12 der Streben 6b anliegen, wobei die Laschen 17, 18 hier mittels Schrauben 19 mit den Böden 12 fest verbunden sind. Auf diese Weise bilden die an den Enden der Streben 6b, 6c miteinander verbundenen Streben 6b, 6c den Rahmen 6. Weiter sind in Figur 6 Durchgangsbohrungen 20 vorhanden, durch welche sich die Schrauben 5a erstrecken. Außenseitig weisen die Seitenschenkel 16 ebenfalls je eine Bohrung 21 auf, welche zur Befestigung des Gehäuses 2 mittels der im Betrieb fehlenden Schrauben 11 dient.

Die an der Außenkontur des Rahmens 6 angeordneten Kanten 6d bzw. die Seitenschenkel 13, 16 (der außenliegende äußere Rand) bilden Stützelemente 22, welche an den unmittelbar gegenüberliegenden Innenseiten 2c des Gehäuses 2 zur Anlage kommen können (aber nicht müssen). Bei Anlage der Stützelemente 22 sind diese aufgrund der Ausbildung der Innenseiten 2c als in Längserstreckung der Stromschienen 3 verlaufende Flachseiten gegenüber den Innenseiten 2c verschiebbar. Die Verschiebbarkeit kann mit einer relativ hohen Reibung verbunden sein, wobei die Länge, über welche die Verschiebbarkeit gewährleistet sein muss, die der thermischen Ausdehnung im Arbeitstemperaturbereich (also einem vorgegebenen Temperaturbereich) ist. Die Anlage der Stützelemente 22 kann auch nur punktuell (also zumindest punktuell) erfolgen.

In diesem Sinne sorgen die Rahmen 6 dafür, dass die Stromschienen 3 im Gehäuse 2 bei Bedarf abgestützt sind (immer dann, wenn es zur Anlage an den Innenseiten 2c kommt).

## Patentansprüche

1. Abstandsmittel (6a) für in einem Gehäuse (2) eines Moduls (1) eines Stromschienensystems angeordnete Stromschienen (3), die jeweils parallel zueinander verlaufen, mit Hilfe von elektrisch isolierenden Abstandselementen (10) beabstandet sind, mit Hilfe von quer durch die Stromschienen (3) und die Abstandselemente (10) verlaufenden Spannelementen (5b) zusammengehalten sind und deren Stromschienenenden (3a, 3b) stirnseitig aus dem Gehäuse (2) herausragen,
wobei mehrere Module (1) des Stromschienensystems jeweils längs hintereinanderliegend angeordnet und elektrisch miteinander verbunden sind,
**gekennzeichnet durch**
einen quer zur Längserstreckung im Gehäuse (2) anordenbaren Rahmen (6), in dem eine Durchgangsöffnung (9) ausgebildet ist, durch welche die Stromschienen (3) unter Belassung eines Abstands (A, B, C) verlaufen, wobei die Enden des Spannelements (5b) beidseitig der Durchgangsöffnung (9) am Rahmen (6) befestigbar sind, und mit einem an der Außenkontur des Rahmens (6) angeordneten Stützelement (22), das bei Anlage an der unmittelbar gegenüberliegenden Innenseite des Gehäuses (2) im Gehäuse (2) in Richtung Längserstreckung bewegbar ist.

2. Abstandsmittel nach Anspruch 1,
**dadurch gekennzeichnet,**
**dass** der Rahmen (6) aus vier an den Enden miteinander verbundenen Streben (6b, 6c) gebildet ist, welche in Längserstreckung der Streben (6b, 6c) gesehen eine u-förmige Querschnittskontur mit einem Boden (12, 14) und zwei Seitenschenkeln (13, 15, 16) aufweisen, wobei sich die Seitenschenkel (13, 15, 16) quer zur Längserstreckung gesehen zumindest über eine Teillänge der Streben (6b, 6c) erstrecken und wobei zwei Streben (6c) auf beiden Stirnseiten Laschen (17, 18) aufweisen, die jeweils mit einem Boden (12) der beiden anderen Streben (6b) unter Bildung der Durchgangsöffnung (9) miteinander verbunden sind.

3. Abstandsmittel nach Anspruch 2,
**dadurch gekennzeichnet,**
**dass** jede Strebe (6b, 6c) aus einem an seinen Längsseiten u-förmig gebogenen Blechstreifen gebildet ist.

4. Abstandsmittel nach Anspruch 2 oder 3,
**dadurch gekennzeichnet,**
**dass** die Böden (14) der Streben (6c) Durchgangsöffnungen (7) aufweisen.

5. Abstandsmittel nach einem der Ansprüche 2 - 4,
**dadurch gekennzeichnet,**
**dass** die Enden des Spannelements (5b) an den beiden beidseitig der Durchgangsöffnung (9) innen einander zugewandten Seitenschenkeln (15) befestigt sind.

6. Abstandsmittel nach einem der Ansprüche 2 - 5,
**dadurch gekennzeichnet,**
**dass** das Gehäuse (2) an zwei außenliegenden voneinander abgewandten Seitenschenkeln (16) des Rahmens (6) befestigbar ist.

7. Modul (1) für ein Stromschienensystem, bei dem mehrere Module (1) längs hintereinanderliegend angeordnet und elektrisch miteinander verbunden sind, aufweisend mehrere parallel zueinander verlaufende Stromschienen (3) deren Stromschienenenden (3a, 3b) stirnseitig aus einem Gehäuse (2) herausragen,
mit elektrisch isolierenden Abstandselementen (10) zwischen den Stromschienen (3),
mit einem Spannelement (5b), das quer durch die Stromschienen (3) und die Abstandselemente (10) verläuft, und
mit Abstandsmitteln (6a) gemäss Anspruch 1, welche die Stromschienen (3) mit Abstand zu den Gehäusewänden im Gehäuse (2) halten.

8. Stromschienensystem mit mehreren längs hintereinanderliegend angeordneten Modulen (1) nach Anspruch 7.

## Claims

1. Spacer means (6a) for busbars (3) which are arranged in a housing (2) of a module (1) of a busbar system, said busbars each running parallel to one another, being spaced apart with the aid of electrically insulating spacer elements (10), being held together with the aid of clamping elements (5b) which run transversely through the busbars (3) and the spacer elements (10), and the busbar ends (3a, 3b) of said busbars protruding out of the housing (2) at the end sides,
wherein a plurality of modules (1) of the busbar system are each arranged such that they lie one behind the other in the longitudinal direction and are electrically connected to one another,
**characterized by**
a frame (6) which can be arranged in the housing (2) transverse to the longitudinal extent and in which a passage opening (9) is formed, the busbars (3) running through said passage opening so as to leave a space (A, B, C), wherein the ends of the clamping element (5b) can be fastened to the frame (6) on both sides of the passage opening (9), and
having a supporting element (22) which is arranged on the outer contour of the frame (6) and which, when it makes contact with the directly opposite inner side of the housing (2), can be moved in the direction of longitudinal extent in the housing (2) .

2. Spacer means according to Claim 1,
**characterized**
**in that** the frame (6) is formed from four struts (6b, 6c) which are connected to one another at the ends and which, as seen in the longitudinal extent of the struts (6b, 6c), have a u-shaped cross-sectional contour with a base (12, 14) and two side limbs (13, 15, 16), wherein the side limbs (13, 15, 16), as seen transverse to the longitudinal extent, extend at least over a partial length of the struts (6b, 6c), and wherein two struts (6c) have lugs (17, 18) on both end sides, said struts being connected to one another in each case by a base (12) of the two other struts (6b) so as to form the passage opening (9).

3. Spacer means according to Claim 2,
**characterized**
**in that** each strut (6b, 6c) is formed from a sheet metal strip which is bent in a u-shape on its longitudinal sides.

4. Spacer means according to Claim 2 or 3,
**characterized**
**in that** the bases (14) of the struts (6c) have passage openings (7) .

5. Spacer means according to one of Claims 2-4,
**characterized**
**in that** the ends of the clamping element (5b) are fastened to the two side limbs (15), of which the insides face one another on both sides of the passage opening (9).

6. Spacer means according to one of Claims 2-5,
**characterized**
**in that** the housing (2) can be fastened to two side limbs (16), of which the outsides are averted from one another, of the frame (6).

7. Module (1) for a busbar system in which a plurality of modules (1) are arranged such that they lie one behind the other in the longitudinal direction and are electrically connected to one another, having a plurality of busbars (3) which run parallel to one another, the busbar ends (3a, 3b) of said busbars protruding out of a housing (2) at the end sides, having electrically insulating spacer elements (10) between the busbars (3),
having a clamping element (5b) which runs transversely through the busbars (3) and the spacer elements (10), and
having spacer means (6a) according to Claim 1 which hold the busbars (3) in the housing (2) at a distance from the housing walls.

8. Busbar system having a plurality of modules (1) according to Claim 7 which are arranged such that they lie one behind the other in the longitudinal direction.

## Revendications

1. Moyen (6a) d'entretoisement pour des barres (3) omnibus, qui sont disposées dans une enveloppe (2) d'un module (1) d'un système de barres omnibus, qui s'étendent parallèlement entre elles, qui sont mises à distance à l'aide d'un élément (10) d'entretoisement isolant électriquement, qui sont maintenues ensemble à l'aide d'éléments (5b) de serrage s'étendant transversalement aux barres (3) omnibus et aux éléments (10) d'entretoisement et dont les extrémités (3a, 3b) des barres omnibus dépassent du côté frontal de l'enveloppe (2),
dans lequel plusieurs modules (1) du système de barres omnibus sont disposés les uns derrière les autres en longueur et sont reliés électriquement entre eux,
**caractérisé par**
un cadre (6), qui peut être disposé transversalement à l'étendue en longueur dans l'enveloppe (2) et dans lequel est constituée une ouverture (9) traversante, dans laquelle s'étendent les barres (3) omnibus, en laissant une distance (A, B, C), les extrémités de l'élément (5b) de serrage pouvant, des deux côtés de l'ouverture (9) traversante, être fixés au cadre (6) et comprenant un élément (22) d'appui, qui est disposé sur le contour extérieur du cadre (6) et qui, par application sur le côté intérieur directement opposé de l'enveloppe (2), est mobile dans l'enveloppe (2) dans la direction de l'étendue en longueur.

2. Moyen d'entretoisement suivant la revendication 1,
**caractérisé en ce que**
le cadre (6) est formé de quatre entretoises (6b, 6c), qui sont reliées entre elles aux extrémités et qui, considéré dans l'étendue en longueur des entretoises (6b, 6c), ont un contour de section transversale en forme de u ayant un fond (12, 14) et deux branches (13, 15, 16)latérales, les branches (13, 15, 16) latérales s'étendant, considéré transversalement à l'étendue en longueur, au moins sur une partie de la longueur des entretoises (6b, 6c) et dans lequel deux entretoises (6c) ont, sur deux côtés frontaux, des pattes (17, 18), qui sont reliées respectivement entre elles chacune par un fond (12) des deux autres entretoises (6b), en formant l'ouverture (9) traversante.

3. Moyen d'entretoisement suivant la revendication 2,
**caractérisé en ce que**
chaque entretoise (6b, 6c) est en une bande de tôle courbée en forme de u sur ses grands côtés.

4. Moyen d'entretoisement suivant la revendication 2 ou 3,
**caractérisé en ce que**
les fonds (14) des entretoises (6c) ont des ouvertures (7) traversantes.

5. Moyen d'entretoisement suivant l'une des revendications 2 à 4,
**caractérisé en ce que**
les extrémités de l'élément (5b) de serrage sont fixées aux branches (15) latérales tournées l'une vers l'autre vers l'intérieur des deux côtés de l'ouverture (9) traversante.

6. Moyen d'entretoisement suivant l'une des revendications 2 à 5,
**caractérisé en ce que**
l'enveloppe (2) peut être fixée à deux branches (16) latérales, éloignées l'une de l'autre du côté extérieur, du cadre (6).

7. Module (1) pour un système de barres omnibus, dans lequel plusieurs modules (1) sont disposés les uns derrière les autres suivant la longueur et sont reliés entre eux électriquement, comportant plusieurs barres (3) omnibus, qui s'étendent parallèlement les unes aux autres, dont les extrémités (3a, 3b) sortent du côté frontal d'une enveloppe (2),
comprenant des éléments (10) d'entretoisement isolant électriquement entre les barres (3) omnibus,
comprenant un élément (5b) de serrage, qui s'étend transversalement aux barres (3) omnibus et aux éléments (10) d'entretoisement et
comprenant des moyens (6a) d'entretoisement suivant la revendication 1, qui maintiennent les barres (3) omnibus dans l'enveloppe (2), à distance des parois de l'enveloppe.

8. Système de barres omnibus, comprenant plusieurs modules (1) suivant la revendication 7, disposés les uns derrière les autres suivant la longueur.
